# EUROPÄISCHE PATENTSCHRIFT

(11) **EP 3 375 507 B1**
(45) Veröffentlichungstag und Bekanntmachung des Hinweises auf die Patenterteilung: **24.06.2020**
(21) Anmeldenummer: 17161205.4
(22) Anmeldetag: 15.03.2017
(51) Int. Cl.: B01D 53/18, B01D 3/22, B01D 3/32, B01D 53/50

(54) **TRAY ODER KORB ZUR VERWENDUNG BEI DER RAUCHGASENTSCHWEFELUNG IN GASWÄSCHERN UND GASWÄSCHER ENTHALTEND TRAYS ODER KÖRBE**
TRAY OR BASKET FOR USE IN FLUE GAS DESULFURIZATION IN GAS SCRUBBERS AND GAS SCRUBBER-CONTAINING TRAYS OR BASKETS
PLATEAU OU PANIER DESTINÉ À ÊTRE UTILISÉ POUR LA DÉSULFURATION DES GAZ DE FUMÉE DANS DES DISPOSITIFS DE LAVAGE ET DISPOSITIF DE LAVAGE COMPRENANT DES PLATEAUX OU DES PANIERS

(43) Veröffentlichungstag der Anmeldung: 19.09.2018
(73) Patentinhaber: Steinmüller Engineering GmbH, 51643 Gummersbach (DE)
(72) Erfinder: Schadow, Uwe, 51643 Gummersbach (DE); Rasche, Dorian, 51643 Gummersbach (DE)
(74) Vertreter: Godemeyer Blum Lenze Patentanwälte Partnerschaft mbB - werkpatent

(56) Entgegenhaltungen:
- WO-A1-2014/196458
- DE-B3-102006 009 105
- DE-C1- 19 929 407
- JP-A- H0 356 120
- US-A1- 2005 046 052

## Beschreibung

Die Erfindung betrifft einen Gaswäscher zur Rauchgasentschwefelung ausgestattet mit Rauchgaseinlass, Rauchgasauslass, Sprüheinrichtung zum Versprühen eines flüssigen Absorptionsmittels, und Flüssigkeitsauslass, sowie einer oder mehrere Tauscherebenen zur Bereitstellung von Tauscherflächen, um das durch den Gaswäscher hindurchströmende Rauchgas mit dem flüssigen Absorptionsmittel in Kontakt zu bringen.

Weiterhin betrifft die Erfindung ein Tray oder einen Korb, der im Querschnitt des Gaswäschers angeordnet wird und dazu dient, das durch den Gaswäscher hindurchströmende Rauchgas mit dem flüssigen Medium in Kontakt zu bringen, sowie ein Verfahren zur Rauchgasentschwefelung.

Bei einem Gaswäscher handelt es sich beispielsweise um einen Waschturm einer Rauchgasentschwefelungsanlage, mit einer zwischen einem unteren Rauchgaseintritt und einem oberen Rauchgasaustritt gelegenen Absorptionszone, einer Mehrzahl von Sprühdüsen für die Zuführung von Waschflüssigkeit in die Absorptionszone, einer in der Absorptionszone angeordneten Absorberstruktur, einer Auffangeinrichtung zum Auffangen von in die Absorptionszone zugeführter Waschflüssigkeit und einem Tropfenabscheider vor dem Rauchgasaustritt.

Solche Waschtürme dienen dazu, beispielsweise das im Rauchgas enthaltene Schwefeldioxid durch Auswaschen mit wässrigen Lösungen oder Suspensionen basisch reagierender Substanzen, wie z. B. Calciumcarbonat, zu binden und schließlich zu entfernen. Rauchgase, die bei fossil befeuerten Kraftwerken zur Elektrizitätserzeugung oder bei der Müllverbrennung entstehen, weisen eine Vielzahl von schädlichen Substanzen wie SOx auf. Im Hinblick auf den Umweltschutz ist es notwendig, die Emission dieser Substanzen in die Atmosphäre zu verringern, weswegen eine Abtrennung aus dem Abgas unerlässlich ist.

Die Entschwefelung des Rauchgases erfolgt nach dem folgenden Grundprinzip: das ungereinigte Rauchgas wird in einen Rauchgas-Wäscher eingeleitet und im Wasch- bzw. Absorptionsbereich mit einer Suspension aus Wasser und Kalksteinmehl beregnet, wodurch das Schwefeldioxid weitgehend absorbiert wird. Dabei geht das gasförmige Schwefeldioxid zunächst in der Absorptionsmittelflüssigkeit als Sulfit und Hydrogensulfit in Lösung. Im unteren Teil des Waschturms, im Absorbersumpf, sammelt sich die mit Sulfit und Hydrogensulfit beladene Wasch- bzw. Absorptionsmittelflüssigkeit. Durch Einblasen von Luft wird Sauerstoff eingebracht und die vorhandenen Schwefelspezies oxidiert. In Kombination mit dem eingebrachten Kalkstein fällt Gips aus. Es entsteht eine Gipssuspension. Auf diese Weise wird das Schwefeldioxid als Gips gebunden, das als unschädliche Substanz auf Deponien gelagert oder auch zur Herstellung von Baugips verwendet werden kann.

Die Rauchgase treten im Gegenstrom mit der Kalksteinsuspension in Kontakt und zwar in der Regel in einem Absorber. In einem Bautyp des Absorbers besteht dieser aus mehreren übereinander angeordneten gitterartigen Tauscherflächen, die auch als "Gridlagen", bezeichnet werden, oder aus einer mehrere Meter starken Packung enthaltend eine Vielzahl von Körpern, die Tauscherflächen bereitstellen. Nachteilig hierbei ist die starke Umlenkung des Rauchgasstroms, der daraus resultierende Druckverlust und die Problematik, dass die Packungen oder die Gridlagen durch Ablagerungen verstopfen.

Bei einer anderen Ausgestaltung des Gaswäschers ist ein Siebboden bzw. eine Lochplatte im Querschnitt des Gaswäschers angeordnet. Der Siebboden dient dazu, dass die Rauchgase mit der Suspension in Kontakt treten können. Auf dem Siebboden bzw. der Lochplatte können weitere oben beschriebene Tauscherflächen angeordnet sein. Der Siebboden besteht in der Regel aus gelochten oder mit Schlitzen versehenen Blechen. Bei Berieselung mit einer Absorptionsmittelflüssigkeit bildet sich eine bewegliche Blasen- oder Schaumschicht auf dem Siebboden aus. Diese dient als Kontaktfläche zwischen zu reinigendem Rauchgas und Absorptionsmittelflüssigkeit. Die Blasen- oder Schaumschicht absorbiert die gasförmigen Komponenten aus dem zu reinigenden Rauchgasstrom. Der Siebboden dient somit zur Bildung und Aufrechterhaltung einer Blasen- oder Schaumschicht. Unmittelbar auf dem Siebboden können ein oder mehrere Gitter als Schaumstabilisatoren aufliegen. In Betrieb tritt der Rauchgasstrom durch den Rauchgaseinlass in den Gaswäscher, durchläuft die Öffnungen des Siebbodens und schäumt die Flüssigkeit auf, die sich auf dem Siebboden befindet. Die von oben herabfließende Absorptionsmittelflüssigkeit regnet durch die Öffnungen des Siebbodens durch. Das Rauchgas seinerseits strömt durch die Öffnungen des Siebbodens. Der vorhandene ggf. auf dem Siebboden aufliegende Schaumstabilisator in Form eines Gitters fördert eine weitere Schaumbildung und damit eine Vergrößerung der Kontaktfläche zwischen Rauchgas und Flüssigkeit.

In einer Weiterentwicklung der Siebböden werden Trays oder Körbe verwendet, die im Wesentlichen aus einem mit Seitenwänden versehenen perforierten Boden bestehen, das heißt eine segmentierte Lochplatte darstellen. Der Vorteil bei Verwendung von Trays oder Körben hierbei ist, dass sich die Absorptionsmittelflüssigkeit nicht mehr durch ungleichmäßigen Gasdurchtritt an bestimmten Stellen des Siebbodens ansammeln kann. In diesem Fall würden dann ggf. an anderen Stellen des Siebbodens keine für die Blasenbildung ausreichenden Mengen an Absorptionsmittelflüssigkeit verbleiben, was an diesen Stellen die Absorption beenden würde. Stattdessen verbleibt die in einem Tray bzw. Korb angesammelte Absorptionsmittelflüssigkeit bis sie durch die Öffnungen im Boden die Ebene des Siebbodens verlässt, ohne dass sie einer wesentlichen horizontalen Bewegung entlang des gesamten Siebboden unterworfen wäre.

Allerdings ist mit den derzeit verwendeten Siebböden mit runden Löchern unter Berücksichtigung der für die Unterstützung der Siebböden erforderlichen Tragkonstruktion, eine freie Fläche von mehr als 40% bezogen auf den Gesamtquerschnitt des Gaswäschers nicht zu erreichen. Daraus ergibt sich der Nachteil, dass bei Verwendung der Absorber des Standes der Technik die geringe freie Fläche für den Durchtritt des zu reinigenden Rauchgases zu einem zu hohen Druckverlust führt. Dadurch ist der Durchsatz des zu reinigenden Rauchgases begrenzt. Ein weiterer Nachteil ist, dass sich mit den Absorbern des Standes der Technik, wie Absorber in Form von Packungen oder Siebböden, der Rauchgasstrom nicht ausrichten lässt. DE102006009105B3 offenbart einen Waschturm insbesondere für eine Rauchgasentschwefelung.

### Aufgabe der Erfindung

Die technische Aufgabe der Erfindung war es daher die freie Fläche zu vergrößern, den Druckverlust zu verringern und den Durchsatz an zu reinigendem Rauchgas zu erhöhen. Eine weitere Aufgabe war es eine Möglichkeit zu schaffen den Rauchgasstrom ausrichten zu können.

### Zusammenfassung der Erfindung

Die technische Aufgabe wird gelöst durch einen Gaswäscher zur Rauchgasentschwefelung gemäß Anspruch 1.

Dabei ist die mindestens eine Tauscherebene im Gaswäscher bevorzugt zwischen dem Rauchgaseinlass und der Sprüheinrichtung oder zwischen dem Rauchgaseinlass und einer der Sprüheinrichtungen angeordnet. Dabei können Tauscherebenen und Sprüheinrichtungen abwechselnd angeordnet sein, und unterhalb der untersten Tauscherebene können ebenfalls Sprüheinrichtungen angeordnet sein.

Die Tauscherebene trennt den Innenraum des Gaswäschers in einen oberen Raum, der oberhalb der jeweiligen Tauscherebene liegt, und einen unteren Raum, der unterhalb der jeweiligen Tauscherebene liegt. Der Bereich der Tauscherebene mit einer Vielzahl von Durchlässen (auch als Durchtrittbereich bezeichnet) dient dem Durchtritt des Rauchgases von dem unteren Raum in den oberen Raum und dem Durchtritt des flüssigen Absorptionsmittels von dem oberen Raum in den unteren Raum. Der Durchtrittbereich stellt zudem eine zusätzliche Tauscherfläche oder Kontaktfläche bereit, an der das Rauchgas mit dem flüssigen Absorptionsmittel in Kontakt tritt. Vorzugsweise werden mindestens 50%, weiter bevorzugt mindestens 60%, 70%, 80%, 90%, 95% besonders bevorzugt 100% dieser Durchtrittbereiche der jeweiligen Tauscherebene von den einlagig angeordneten horizontal ausgerichteten Gitterelementen gebildet.

Wie bereits oben erwähnt weist das jeweilige Gitterelement einen Gitterboden auf. In der einfachsten Ausführungsform besteht das Gitterelement lediglich aus dem Gitterboden bzw. Gitter. In einer bevorzugten Ausgestaltung, wie weiter unten im Detail ausgeführt wird, weist das Gitterelement senkrechte entlang des Umfangs des Gitterbodens verlaufende Seitenwände auf, wobei ein Tray oder Korb enthaltend einen Gitterboden ausgebildet wird.

Das Gitterelement bzw. der Gitterboden weist vorzugsweise eine rechteckige Grundfläche auf. Die Grundfläche kann jedoch auch stellenweise abgerundet sein, wenn das Gitterelement auch direkt im Wandbereich des in der Regel einen runden Querschnitt aufweisenden Gaswäschers angeordnet werden soll.

Gemäß der Erfindung sind die Durchtrittbereiche, d.h. das Gitterelement bzw. der Gitterboden frei von Füllkörpern bzw. Füllkörperpackungen. Zudem weist das Gitterelement bzw. der Gitterboden keine an diesem Gitterboden angeordnete parallel zur Ebene des Gitterbodens ausgerichtete zusätzliche Gitter, Loch- oder Siebböden auf. Solche Kombinationen sind dagegen im Stand der Technik bekannt, wobei ein oder mehrere verschiedenartige Gitter direkt auf Loch- oder Siebböden als Schaumstabilisatoren, Flüssigkeitsverteiler und/oder Flüssigkeitskollektoren angebracht ist bzw. sind.

Bevorzugt ist die jeweilige Tauscherebene, besonders bevorzugt der Gaswäscher an sich, frei von Füllkörpern bzw. Füllkörperpackungen.

Die einlagige Anordnung der Gitterelemente bedeutet, dass die Gitterelemente in einer Lage bzw. in einer Schicht angeordnet sind, bevorzugt direkt aneinander angrenzend bzw. benachbart zueinander angeordnet sind. Die Gitterelemente werden nicht gestapelt, weder mit Gitterelementen der gleichen Bauart noch mit Gitterelementen anderer Bauart. Wie oben bereits erläutert, weisen die Gitterelemente keinen zusätzlichen Gitter oder Loch- oder Siebboden auf, deren Ebene parallel zur Ebene des Gitterbodens des Gitterelementes verläuft.

Die einlagige Anordnung von einer Vielzahl von senkrecht ausgerichteten flachen Längsrippen und einer Vielzahl von senkrecht ausgerichteten flachen Querrippen, aus der der Gitterboden des Gitterelementes besteht, bedeutet, dass die Längs- und Querrippen in einer Lage bzw. in einer Schicht angeordnet sind. Die vertikale Stärke dieser Schicht, und damit die Stärke des Gitterbodens, entsprechen der größten Breite der vorhandenen Rippen. Dabei sind die Längs- und Querrippen entlang ihrer Längsachse horizontal ausgerichtet, während sie entlang ihrer Breitenausdehnung vertikal ausgerichtet sind. Erfindungsgemäß sind an der genannten einen Schicht von Längs- und Querrippen (Gitterboden) keine weiteren Lagen von Längsrippen und Querrippen und somit keine weiteren Gitter parallel zu dieser Schicht angeordnet.

Es versteht sich, dass hinsichtlich des Gitterelementes die Längsrippen durch die Querrippen miteinander verbunden sind. Vorzugsweise sind die Querrippen im rechten Winkel zu den Längsrippen angeordnet.

Die Längsrippen und die Querrippen der Gitterelemente bilden offene Zellen (die Durchlässe) aus, wobei die offenen Zellen den ausschließlichen Durchlass (für das Rauchgas und das flüssige Absorptionsmittel) des jeweiligen Gitterelementes definieren. Die offenen Zellen definieren die räumliche Ausgestaltung der Durchlässe der Gitterelemente. Die jeweiligen offenen Zellen sind oben und unten offen. Die offenen Zellen lassen das Rauchgas und das flüssige Absorptionsmittel in zur Ebene der Schicht senkrechten Richtungen hindurchströmen.

Die freie Fläche der jeweiligen offenen Zelle wird ausschließlich durch die die Zellen seitlich begrenzenden flachen (und geraden) Längs- und Querrippen definiert. Die freie Fläche der jeweiligen offenen Zelle berechnet sich daher auf Basis der maximalen Innenabmessung entlang der Längsrippe und der maximalen Innenabmessung entlang der Querrippe der offenen Zelle, bzw. im Fall, dass Längs- und Querrippen senkrecht zueinander stehen, berechnet sich die freie Fläche der jeweiligen offenen Zellen aus dem Produkt der maximalen Innenabmessung entlang der Längsrippe und der maximalen Innenabmessung entlang der Querrippe der Zelle.

Wie bereits oben erwähnt, bilden die Längsrippen und die Querrippen der Gitterelemente offene Zellen aus, wobei die jeweilige offene Zelle über ihren gesamten Grundriss freie Strömungspfade definiert. Die Achsen der freien Strömungspfade verlaufen durch die offenen Zellen hindurch parallel zur Strömungsrichtung des Rauchgases, bzw. parallel zur Senkrechten und passieren die offenen Zellen ungehindert.

Gemäß der Erfindung sind die Längsrippen und Querrippen flach, d.h. flanschlos ausgebildet. Der Vorteil dieser konstruktiv einfachen Ausgestaltung der Gitterelemente bzw. Gitterböden gemäß der Erfindung liegt in der Verringerung der Wahrscheinlichkeit der Verstopfung der Durchlässe durch Ablagerungen.

Der Gaswäscher der vorliegenden Erfindung weist mit der oben definierten Tauscherebene als Tauscherfläche eine größere freie Fläche als beispielsweise ein Siebboden auf, wobei der Druckverlust verringert bzw. der Durchsatz an zu reinigendem Rauchgas erhöht wird. Mit der erfindungsgemäß verwendeten Tauscherebene bzw. den Gitterelementen wird zudem die Tauscherfläche im Vergleich zu einem Siebboden erhöht. Weitere Vorteile sind eine geringere Wahrscheinlichkeit der Verstopfung der Durchlässe durch Ablagerungen und die dadurch verlängerten Wartungsintervalle.

In einer bevorzugten Ausführungsform des Gaswäschers stellt die eine oder die mehreren Tauscherebene(n) die alleinig vorhandene quer zur Strömungsrichtung des Rauchgases bzw. horizontal ausgerichtete Tauscherfläche für den Kontakt zwischen dem Rauchgas und dem flüssigen Absorptionsmittel dar. Dies bedeutet, dass vorzugsweise zwischen dem Rauchgaseinlass und der Sprüheinrichtung bzw. zwischen dem Rauchgaseinlass und einer der mehreren Sprüheinrichtungen außer den beschriebenen Tauscherebenen keine weitere dem Kontakt zwischen dem Rauchgas und dem flüssigen Absorptionsmittel dienende Einrichtung vorliegt.

In einer weiteren bevorzugten Ausführungsform sind im Gaswäscher mehrere Tauscherebenen angeordnet. Der Abstand zwischen den Tauscherebenen beträgt dann mindestens 150 cm, bevorzugt mindestens 200 cm. Weiter bevorzugt ist, dass oberhalb jeder Tauscherebene jeweils mindestens eine Sprüheinrichtung angeordnet ist. Zudem können auch unterhalb der Tauscherebene, insbesondere unterhalb der untersten Tauscherebene, falls mehrere Tauscherebenen vorliegen, Sprüheinrichtungen vorhanden sein.

In einer weiteren bevorzugten Ausführungsform des Gaswäschers liegen die Gitterelemente auf einer Tragkonstruktion auf, die den Querschnitt des Gaswäschers durchqueren, wobei die Tragkonstruktion primäre Tragbalken, sekundäre Tragbalken und ggf. weitere Tragbalken höherer Ordnung aufweist.

Weiterhin ist bevorzugt, dass die Längsrippen und die Querrippen der Gitterelemente offene Zellen ausbilden, deren Ausdehnung in Längsrichtung 6,0 bis 20,0 cm, in Querrichtung 1,0 bis 5,0 cm und deren Tiefe 1,0 bis 8,0 cm beträgt. Besonders bevorzugt betragen die Abmessungen der offenen Zellen in Längsrichtung 8,0 bis 16,0 cm, in Querrichtung 1,6 bis 4,0 cm und deren Tiefe 1,5 bis 7,0 cm. Mit diesen Abmessungen weisen die offenen Zellen des Gitterelementes vorzugsweise eine längliche Form auf. Somit ist das Verhältnis der (horizontalen) Längserstreckung zur (horizontalen) Quererstreckung der offenen Zellen vorzugsweise 1,2:1 bis 20:1, bevorzugt 2:1 bis 10:1, weiter bevorzugt 4:1 bis 8:1. Die jeweils gewählten Abmessungen der offenen Zellen können, müssen aber nicht über die gesamte Tauscherebene gleich sein. So ist es beispielsweise möglich, dass Gitterelemente in der Nähe des Zentrums der Tauscherebene andere Abmessungen aufweisen als Gitterelemente, die im Wandbereich des Gaswäschers angeordnet sind, wobei die Abmessungen vorzugsweise jeweils aus den oben aufgeführten Bereichen gewählt werden. Zudem können für verschiedene Tauscherebenen unterschiedliche Abmessungen für die offenen Zellen ausgewählt werden, wobei die Abmessungen vorzugsweise jeweils aus den oben aufgeführten Bereichen gewählt werden.

Dabei ist weiterhin insbesondere bevorzugt, dass die Längsrippen und die Querrippen der Gitterelemente eine Stärke von 3,0 bis 10,0 mm und eine Breite (entsprechend der Tiefe der offenen Zellen) von 1,0 bis 8,0 cm aufweisen, weiter bevorzugt eine Stärke von 4,0 bis 9,0 mm und eine Breite von 1,5 bis 7,0 cm aufweisen.

Dabei können die Längsrippen eine andere Breite aufweisen als die Querrippen. Bevorzugt weisen die Längsrippen eine Breite von 4,0 bis 6,0 cm auf und die Querrippen eine Breite von 1,5 bis 3 cm. Die offenen Zellen weisen in dieser Ausführungsform entsprechend unterschiedlich tiefe Seitenwände auf.

In einer weiteren bevorzugten Ausführungsform weisen die jeweiligen Gitterelemente eine Grundfläche von A x B auf, wobei A 60,0 bis 200,0 cm und B 100,0 bis 300,0 cm beträgt.

In einer weiteren bevorzugten Ausführungsform des Gaswäschers ist die jeweilige Tauscherebene zu mindestens 70%, bevorzugt mindestens 80%, weiter bevorzugt mindestens 90% bezogen auf die Querschnittsfläche des Gaswäschers mit den Gitterelementen versehen.

In einer weiteren besonders bevorzugten Ausführungsform des Gaswäschers ist der Rauchgaseinlass seitlich am Gaswäscher angeordnet, wobei der Flächenanteil der offenen Zellen, die mit ihrer Längsrichtung im Wesentlichen quer zur Ausbreitungsrichtung des Rauchgases angeordnet sind, mindestens 60%, bevorzugt mindestens 70%, weiter bevorzugt mindestens 80%, noch weiter bevorzugt mindestens 90% beträgt. Dies führt dazu, dass in einem Gaswäscher, in dem das Rauchgas zu einer seitlichen Verschiebung neigt, die Längsrichtung der offenen Zellen vorwiegend parallel zum Rauchgaseintritt ausgerichtet wird. In einem Gaswäscher, in dem das Rauchgas dazu neigt, an der dem Rauchgaseintritt gegenüberliegenden Wand aufzusteigen, führt dies dazu, dass die Längsrichtung der offenen Zellen quer zum Rauchgaseintritt ausgerichtet wird.

Auf diese Weise kann der zunächst seitlich in den Gaswäscher einströmende und dann in die Höhe umschwenkende Rauchgasstrom ausgerichtet werden, d.h., der aufwärts strebende Rauchgasstrom kann in horizontaler Richtung verschoben werden, beispielsweise von der Wand des Gaswäschers weg in Richtung der Mitte des Gaswäschers bzw. in Richtung des Rauchgaseintritts. Diese vorteilhafte Möglichkeit der Ausrichtung des Rauchgasstroms ist bei Packungswäschern oder bei mit Siebboden bzw. Lochböden versehenen Gaswäschern aufgrund der fehlenden horizontalen Ausrichtung der Rauchgasdurchlässe nicht möglich.

In einer anderen bevorzugten Ausführungsform des Gaswäschers ist der Querschnitt des Gaswäschers mindestens zu 90%, bevorzugt mindestens 95%, weiter bevorzugt mindestens 98% von der jeweiligen Tauscherebene im Wesentlichen bestehend aus den beschriebenen Gitterelementen, der Tragkonstruktion und Wandabdeckungen abgedeckt. Dies bedeutet, dass in bevorzugter Weise (mit Ausnahme des Randbereiches und der Tragkonstruktionen) der Querschnitt des Gaswäschers im Wesentlichen vollständig von der jeweiligen Tauscherfläche abgedeckt ist.

Weiterhin ist insbesondere bevorzugt, dass bezogen auf den Gesamtquerschnitt des Gaswäschers der jeweiligen Tauscherebene die freie Fläche mindestens 45%, bevorzugt mindestens 50% und besonders bevorzugt mindestens 55% beträgt.

In bevorzugter Weise sind die Gitterelemente aus Kunststoff oder glasfaserverstärktem Kunststoff gefertigt, wobei zusätzlich Stahlträger zur Erhöhung der Stabilität eingearbeitet sind, oder die Gitterelemente sind aus Edelstahl gefertigt.

In der erfindungsgemäßen Ausgestaltung des Gaswäschers sind die Gitterelemente als Trays oder Körbe ausgestaltet. Dabei stellen die Gitterböden die Böden von Trays dar, die senkrecht ausgerichtete Seitenwände aufweisen, die entlang des Umfangs der Gitterböden verlaufen und diese begrenzen, und wobei die Tauscherebene eine Vielzahl von nebeneinander angeordneten Trays aufweist. Der Vorteil der Ausgestaltung der Gitterelemente in Form von Trays ist hierbei die bessere Handhabbarkeit beim Einsetzen und Austauschen der Elemente. Weiterhin ist eine Segmentierung der Tauscherebene vorteilhaft, weil sich die oberhalb der Tauscherfläche versprühte Absorptionsmittelflüssigkeit nicht mehr an bestimmten Stellen des Siebbodens ansammeln kann. Stattdessen verbleibt die in einem Tray angesammelte Absorptionsmittelflüssigkeit in dem durch das Tray abgegrenzten Segment bis sie durch die Öffnungen, d.h. durch die offenen Zellen, im Boden des Trays die Tauscherebene in Richtung Absorbersumpf verlässt.

In einer weiteren bevorzugten Ausgestaltung sind die Trays oder Körbe aus Kunststoff oder glasfaserverstärktem Kunststoff gefertigt, wobei zusätzlich Stahlträger zur Erhöhung der Stabilität eingearbeitet sind, oder die Trays oder Körbe sind aus Edelstahl gefertigt.

Die Trays liegen entweder auf einer den Querschnitt des Gaswäschers querenden Tragkonstruktion auf oder sind in dieser Tragkonstruktion eingehängt angeordnet. Die Tragkonstruktion weist primäre Tragbalken, sekundäre Tragbalken und ggf. weitere Tragbalken höherer Ordnung auf.

Die Erfindung stellt weiterhin ein Tray oder Korb zur Verwendung als Tauscherfläche in einem Gaswäscher zur Rauchgasentschwefelung bereit, wie definiert in Anspruch 9.

Die erfindungsgemäßen Trays oder Körbe werden in oben beschriebenen Gaswäschern zur Rauchgasentschwefelung verwendet, wobei die Trays die Segmente einer Tauscherebene bilden, die im Gaswäscher im Wesentlichen horizontal ausgerichtet vorzugsweise zwischen dem Rauchgaseinlass und der oder einer der mehreren Sprüheinrichtungen angeordnet ist. Die Trays bzw. Körbe, bzw. die daraus gebildete Tauscherebene stellt die Tauscherfläche dar, um das durch den Gaswäscher hindurchströmende Rauchgas mit einem flüssigen Absorptionsmittel in Kontakt zu bringen.

In dem erfindungsgemäßen Tray oder Korb bilden die Längsrippen und die Querrippen des Gitterelementes offene Zellen aus, deren Ausdehnung in Längsrichtung 6,0 bis 20,0 cm, in Querrichtung 1,0 bis 5,0 cm und deren Tiefe 1,0 bis 8,0 cm beträgt. Besonders bevorzugt betragen die Abmessungen der offenen Zellen in Längsrichtung 8,0 bis 16,0 cm, in Querrichtung 1,6 bis 4,0 cm und deren Tiefe 1,5 bis 7,0 cm. Mit diesen Abmessungen weisen die offenen Zellen des Gitterbodens der Trays vorzugsweise eine längliche Form auf. Somit beträgt das Verhältnis der (horizontalen) Längserstreckung zur (horizontalen) Quererstreckung der offenen Zellen vorzugsweise 1,2:1 bis 20:1, bevorzugt 2:1 bis 10:1, weiter bevorzugt 4:1 bis 8:1.

Dabei ist weiterhin insbesondere bevorzugt, dass die Längsrippen und die Querrippen des Gitterbodens der Trays eine Stärke von 3,0 bis 10,0 mm und eine Breite (entsprechend der Tiefe der offenen Zellen) von 1,0 bis 8,0 cm aufweisen, weiter bevorzugt eine Stärke von 4,0 bis 9,0 mm und eine Breite von 1,5 bis 7,0 cm aufweisen.

Dabei können die Längsrippen eine andere Breite aufweisen als die Querrippen. Bevorzugt weisen die Längsrippen eine Breite von 4,0 bis 6,0 cm auf und die Querrippen eine Breite von 1,5 bis 3 cm. Die offenen Zellen weisen in dieser Ausführungsform entsprechend unterschiedlich tiefe Seitenwände auf.

Das Tray oder Korb gemäß der vorliegenden Erfindung besitzt vorzugsweise eine Grundfläche von A x B, wobei A 60,0 bis 200,0 cm und B 100,0 bis 300,0 cm beträgt.

Insbesondere ist bevorzugt, dass das Tray bzw. der Korb aus Kunststoff oder glasfaserverstärktem Kunststoff gefertigt ist, wobei zusätzlich Stahlträger zur Erhöhung der Stabilität eingearbeitet sind, oder das Tray bzw. der Korb ist aus Edelstahl gefertigt. In bevorzugten Ausführungsformen weisen die Trays zur besseren Handhabung Grifflöcher in den Seitenwänden oder Griffstangen auf, die oberhalb des Gitterbodens in zwei sich gegenüberliegenden Seitenwänden des Trays eingelassen sind. Die Trays liegen entweder auf einer den Querschnitt des Gaswäschers querenden Tragkonstruktion auf oder sind eingehängt in dieser Tragkonstruktion angeordnet. Für die in die Tragkonstruktion eingehängte Anordnung weisen die Trays vorzugsweise ein gestuftes Seitenprofil auf. Dabei wird im Bereich der Seitenwände des Trays eine Auflagefläche ausgebildet, mit der das Tray auf den Tragbalken aufliegt, während die Ebene des Gitterbodens des Trays unterhalb der Ebene der Oberseite des Tragbalkens zu liegen kommt. Die Auflagefläche des Trays kann entweder vollständig umlaufend um den Gitterboden, oder auf zwei sich gegenüberliegenden Seiten des Trays ausgebildet sein.

Weiterhin betrifft die vorliegende Erfindung auch die Verwendung der oben beschriebenen Trays oder Körbe in einem Gaswäscher zur Rauchgasentschwefelung nach Anspruch 13.

Dabei wird das Rauchgas vorteilhafterweise auf der Oberfläche der Gitterelemente, insbesondere auf der Oberfläche der Gitterböden, d.h. auf der Oberfläche der Längs- und Querrippen mit dem flüssigen Absorptionsmittel in Kontakt gebracht. Somit stellen die Gitterelemente, beispielsweise in ihrer Ausführungsform als Tray oder Korb, und insbesondere die Gitterböden die Tauscherfläche bzw. Kontaktfläche dar.

Die vorliegende Erfindung betrifft auch ein Verfahren zur Rauchgasentschwefelung nach Anspruch 14.

In dem Verfahren erfolgt die Entschwefelung des Rauchgases, indem das ungereinigte Rauchgas in einen Rauchgas-Wäscher eingeleitet wird und im Wasch- bzw. Absorptionsbereich mit dem flüssigen Absorptionsmittel auf Basis von Suspensionen enthaltend Calciumverbindungen besprüht wird. Dadurch wird das Schwefeldioxid weitgehend absorbiert. Dabei geht das gasförmige Schwefeldioxid zunächst in der Absorptionsmittelflüssigkeit als Sulfit und Hydrogensulfit in Lösung. Im unteren Teil des Waschturms, im Absorbersumpf, sammelt sich die mit Sulfit und Hydrogensulfit beladene Wasch- bzw. Absorptionsmittelflüssigkeit. Durch Einblasen von Luft wird Sauerstoff eingebracht und die vorhandenen Schwefelspezies oxidiert. In Kombination mit den Calciumverbindungen (Kalkstein) fällt Gips aus. Auf diese Weise wird das Schwefeldioxid als Gips gebunden.

Das flüssige Absorptionsmittel auf Basis von Suspensionen enthaltend Calciumverbindungen wird mit Hilfe der Sprüheinrichtungen versprüht. Dabei weist der produzierte Sprühnebel vorzugsweise einen Sauterdurchmesser von unter 3 mm, weiter bevorzugt von 1,4 bis 2,6 mm auf. In einer bevorzugten Verfahrensführung werden 10 bis 40 Liter Absorptionsmittelflüssigkeit pro m³ eingeleitetes Rauchgas versprüht.

Bei dem erfindungsgemäßen Verfahren treten die Rauchgase im Gegenstrom mit der Kalksteinsuspension in Kontakt. Die Tauscherebenen mit den oben beschriebenen Gitterelementen oder Trays dienen als Tauscherflächen. Der Vorteil der Ausgestaltung der Gitterelemente wie hier beschrieben ist, dass der Rauchgasstrom nicht oder kaum umgelenkt wird, der Druckverlust gering ist und die Gitterelemente nicht durch Ablagerungen verstopfen. Zudem dienen die in dem Verfahren verwendeten Gitterelemente bzw. Trays aufgrund ihrer Struktur der Vergrößerung der Kontaktfläche zwischen Rauchgas und Flüssigkeit.

Die Gitterelemente bzw. der Gitterboden dient dazu, dass die Rauchgase mit der Suspension in Kontakt treten können. Die auf den Gitterelementen bzw. Gitterböden vorhandene Flüssigkeitsschicht des Absorptionsmittels absorbiert die Schadgase oder Sauergase. Die von oben herabfließende Absorptionsmittelflüssigkeit regnet durch die Öffnungen des Gitterelementes bzw. des Gitterbodens durch. Das Rauchgas seinerseits strömt durch die offenen Zellen des Gitterelementes.

In bevorzugten Verfahren durchströmen mindestens 50%, weiter bevorzugt mindestens 60%, 70%, 80%, 90%, 95%, des Rauchgases die Tauscherebene(n) über die Gitterböden der Gitterelemente.

In einer besonders bevorzugten Ausführungsform des Verfahrens kommen Gitterelemente in Form von Trays oder Körben zum Einsatz. Diese bestehen im Wesentlichen aus einem mit Seitenwänden versehenen einfachen Gitter. Der Vorteil bei Verwendung von Trays oder Körben hierbei ist, dass die Absorptionsmittelflüssigkeit durch die Öffnungen im Gitterboden die Ebene des Gitterelementes bzw. des Trays verlässt, ohne dass sie einer wesentlichen horizontalen Bewegung entlang der gesamten Tauscherebene unterworfen wäre.

In einem weiteren besonders bevorzugten Verfahren, strömt das Rauchgas seitlich in den Gaswäscher ein. Dabei kann der Rauchgasstrom mit Hilfe der länglichen offenen Zellen der Gitterelemente ausgerichtet werden. Vorzugsweise beträgt der Flächenanteil der offenen Zellen, die mit ihrer Längsrichtung im Wesentlichen quer zur Ausbreitungsrichtung des Rauchgases angeordnet sind, mindestens 60%, bevorzugt mindestens 70%, weiter bevorzugt mindestens 80%, noch weiter bevorzugt mindestens 90%. Dies führt dazu, dass in einem Gaswäscher, in dem das Rauchgas zu einer seitlichen Verschiebung neigt, die Längsrichtung der offenen Zellen vorwiegend parallel zum Rauchgaseintritt ausgerichtet wird. In einem Gaswäscher, in dem das Rauchgas dazu neigt, an der dem Rauchgaseintritt gegenüberliegenden Wand aufzusteigen, führt dies dazu, dass die Längsrichtung der offenen Zellen quer zum Rauchgaseintritt ausgerichtet wird.

Die Erfindung wird anhand der Figuren weiter im Detail beschrieben, ohne dass die Figuren einschränkend zu verstehen sind.
**Figur 1** zeigt eine Vorrichtung bzw. einen Gaswäscher zur Behandlung von Rauchgas.
**Figuren 2** und **3** zeigen verschiedene Ansichten eines erfindungsgemäß verwendeten Gitterelementes.
**Figuren 4** und **5** zeigen verschiedene Ansichten eines erfindungsgemäßen Gitterelementes in Form eines Trays bzw. eines Korbes.

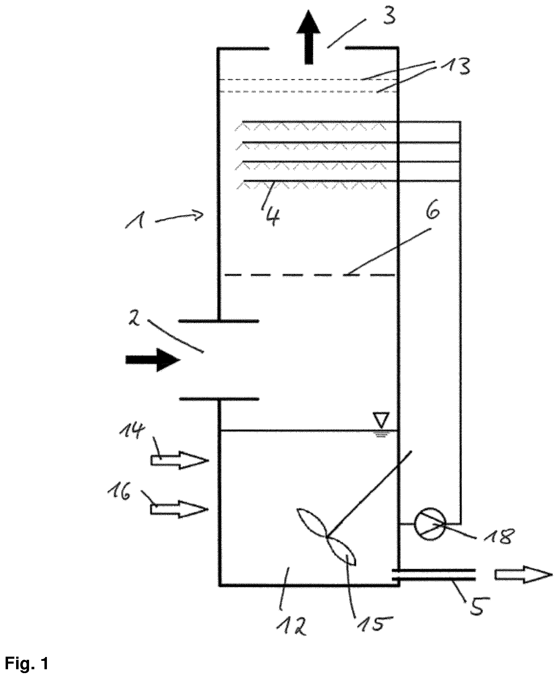

**Figur 1** zeigt eine Vorrichtung bzw. einen Gaswäscher 1 zur Behandlung von Rauchgas. Der in der Figur dargestellte Rauchgas-Wäscher 1 weist einen Behälter auf, in dessen Fuß ein Absorbersumpf 12 ausgebildet ist. Der Gaswäscher 1 ist oberhalb des Absorbersumpfes 12 mit einem Eintritt 2 für das zu behandelnde Rauchgas versehen. Mit Abstand von der Oberfläche des Absorbersumpfes 12 ist in der Figur eine schematisch dargestellte Sprüheinrichtung 4 mit hier vier Sprühebenen vorgesehen. Das Absorptionsmittel aus dem Absorbersumpf 12 wird über eine oder mehrere Pumpen 18 zu der oder den Sprüheinrichtungen 4 befördert.

Oberhalb der Sprüheinrichtung 4 ist ein Tropfenabscheider 13 angeordnet, der die von dem Gas mitgerissene Flüssigkeit abscheidet und dem Prozess wieder zuführt, d.h. an den Tropfenabscheidern bleiben die Tropfen hängen, die dann nach unten tropfen und wieder in den Absorbersumpf 12 gelangen. Der Tropfenmitriss im Gas wird dementsprechend verringert.

In der in der Figur 1 gezeigten Ausführungsform wird dem Absorbersumpf 12 bei Durchführung der Entschwefelung frische alkalihaltige Adsorptionsmittelsuspension über die Zuführung 14 zugeführt. Der Absorbersumpf 12 ist mit einem Rührwerk 15 versehen.

Zur Erzeugung von Gips wird dem Absorbersumpf 12 zusätzlich Oxidationsluft über die Zuführung 16 zugeführt. Die gipshaltige Suspension wird bei 5 von dem Absorbersumpf 12 abgezogen. Das behandelte Gas wird am oberen Ende des Gaswäschers über einen Gasabführungsstutzen (Rauchgasauslass) 3 abgezogen.

In dem Gaswäscher 1 ist erfindungsgemäß weiterhin eine Tauscherebene 6 als Tauscherfläche vorgesehen. Die Tauscherebene 6 ist im Gaswäscher 1 im Wesentlichen horizontal ausgerichtet und in der Regel zwischen dem Rauchgaseinlass 2 und der oder den Sprüheinrichtungen 4 angeordnet. Weiterhin könnten zusätzliche Sprüheinrichtungen 4 unterhalb der oder den Tauscherebene(n) 6 angeordnet sein (in der Figur nicht dargestellt). Die Tauscherebene 6 stellt eine zusätzliche Tauscher- bzw. Kontaktfläche bereit. Hier wird das durch den Gaswäscher 1 hindurchströmende Rauchgas mit dem von der Sprüheinrichtung 4 versprühten flüssigen Absorptionsmittel in Kontakt gebracht. Gemäß der Erfindung weist die Tauscherebene 6 ein oder mehrere horizontal ausgerichtete rechteckige oder quadratische Gitterelemente auf (in der Figur 1 nicht dargestellt).

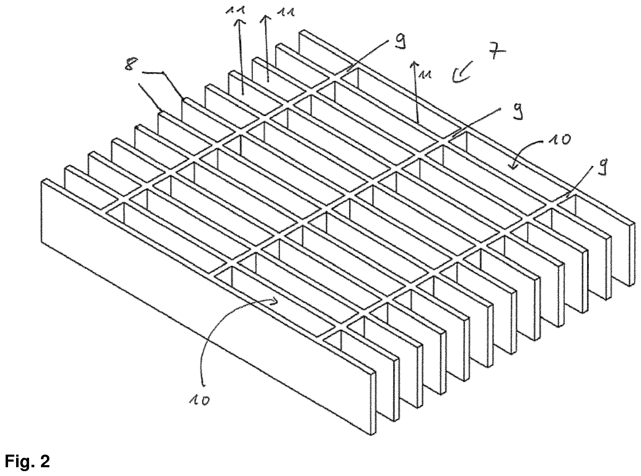

**Figur 2** ist eine perspektivische Ansicht eines Gitterelementes 7 zur Anordnung in der Tauscherebene. Wie oben beschrieben, weist die Tauscherebene ein oder mehrere horizontal ausgerichtete rechteckige oder quadratische Gitterelemente 7 auf. Die Gitterelemente 7 werden gemäß der Erfindung aus senkrecht ausgerichteten flachen Längsrippen 8 gebildet, die durch senkrecht ausgerichtete flache Querrippen 9 verbunden sind. Somit sind die Längsrippen 8 und Querrippen 9 entlang ihrer Längsachse horizontal ausgerichtet, während sie entlang ihrer Breitenausdehnung senkrecht ausgerichtet sind. Die Längsrippen 8 und die Querrippen 9 der Gitterelemente 7 bilden nach oben und unten offene Zellen 10 aus. Die offenen Zellen 10 definieren den ausschließlichen bzw. einzigen Durchlass des jeweiligen Gitterelementes 7 für das Rauchgas. Dabei sind die von den Längsrippen 8 und den Querrippen 9 gebildeten Seitenwände der offenen Zellen 10 senkrecht angeordnet und parallel zur Strömungsrichtung des Rauchgases ausgerichtet.

Die Vielzahl von senkrecht ausgerichteten flachen Längsrippen 8 und die Vielzahl von senkrecht ausgerichteten flachen Querrippen 9 sind in einer Schicht angeordnet, aus der der Gitterboden des Gitterelementes besteht. Die vertikale Stärke dieser Schicht entspricht daher der größten Breite der vorhandenen Rippen. Das Gitterelement weist außer der genannten einen Schicht von Längs- und Querrippen keine weiteren Lagen von Längsrippen 8 und Querrippen 9 keine weiteren Gitter, Loch- oder Siebböden parallel zu dieser Schicht auf.

Die Längsrippen 8 und die Querrippen 9 der Gitterelemente bilden offene Zellen 10 aus, die freie Strömungspfade 11 definieren, deren Achsen durch die offenen Zellen 10 hindurch parallel zur Strömungsrichtung des Rauchgases verlaufen. Die freien Strömungspfade 11 verlaufen parallel zu den die offenen Zellen 10 begrenzenden Oberflächen der flachen Seiten der Längsrippen 8 und Querrippen 9. Die Längsrippen 8 und Querrippen 9 sind flach und flanschlos und weisen keine weiteren Anbauteile auf, die den Strömungspfad 11 behindern könnten.

Die in der Figur 2 gezeigte besonders bevorzugte Ausführungsform des Gitterelementes 7 weist längliche offene Zellen 10 auf. Die Abmessungen der offenen Zellen 10 betragen etwa in Längsrichtung 12 cm, in Querrichtung 2 cm und eine Tiefe von 2 cm an den kurzen Seitenflächen (Querrippen 9) und eine Tiefe von ca. 6 cm an den langen Seitenflächen (Längsrippen 8). Die Stärke der Längsrippen 8 und der Querrippen 9 beträgt in der gezeigten Ausführungsform etwa 7 mm. Der Rauchgaseinlass des Gaswäschers ist in der Regel seitlich angeordnet. Daher strömt der Rauchgasstrom zunächst seitlich in den Gaswäscher ein und schwenkt dann, meist in der Nähe der dem Rauchgaseinlass gegenüber liegenden Wand, nach oben zur Tauscherebene. Die Gitterelemente können nun so eingebaut werden, dass der mehr oder weniger vertikal ausgerichtete Rauchgasstrom in seiner Lage horizontal beeinflusst werden kann. Wenn beispielsweise die Längsrichtung der offenen Zellen 10 im Wesentlichen quer zur Richtung des Rauchgaseinlasses ausgerichtet werden, kann der Hauptteil des nach oben strebenden vertikalen Rauchgasstroms von der Wand des Gaswäschers in Richtung seiner Mitte verschoben werden.

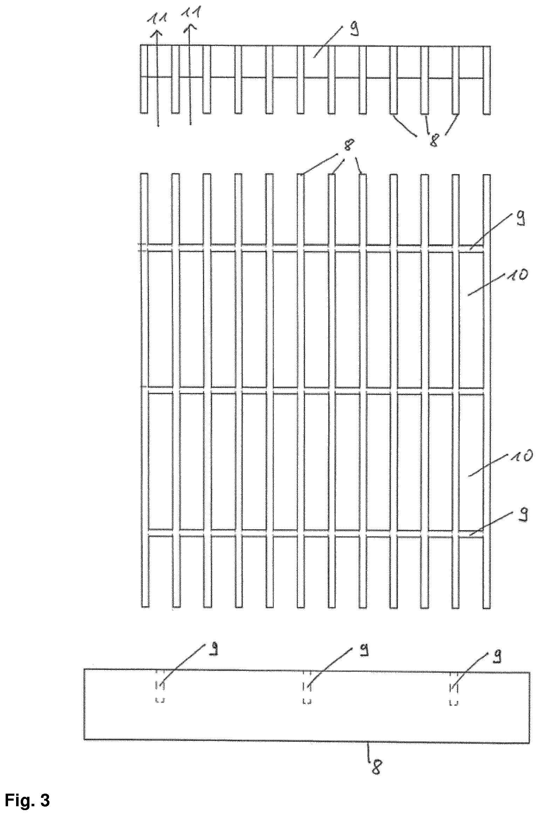

**Figur 3** zeigt verschiedene Ansichten des Gitterelementes 7. In der mittleren Abbildung wird eine Draufsicht des Gitterelementes 7 gezeigt. Wie oben beschrieben, werden die Gitterelemente 7 aus senkrecht ausgerichteten flachen Längsrippen 8 gebildet, die durch senkrecht ausgerichtete flache Querrippen 9 verbunden sind. Die Längsrippen 8 und die Querrippen 9 der Gitterelemente 7 bilden offene Zellen 10 aus. Die Achsen der Strömungspfade 11 (nicht gezeigt) stehen senkrecht zur Ebene.

In der oberen Abbildung wird eine Seitenansicht des Gitterelementes 7 gezeigt. In der dargestellten Ausführungsform weisen die im Querschnitt dargestellten Längsrippen 8 eine größere vertikale Abmessung (Breite der Rippe entsprechend der Tiefe der offenen Zellen bzw. der Stärke des Gitterbodens) auf als die in Seitenansicht dargestellten Querrippen 9. Die Strömungspfade des Rauchgases werden mit der Kennziffer 11 dargestellt.

In der unteren Abbildung wird eine zur oberen Ansicht um 90° gedrehte Seitenansicht gezeigt. In der dargestellten Ausführungsform weisen die im Querschnitt dargestellten Querrippen 9 eine geringere vertikale Abmessung (Breite der Rippe entsprechend der Tiefe der offenen Zellen bzw. der Stärke des Gitterbodens) auf als die in Seitenansicht dargestellten Längsrippen 8.

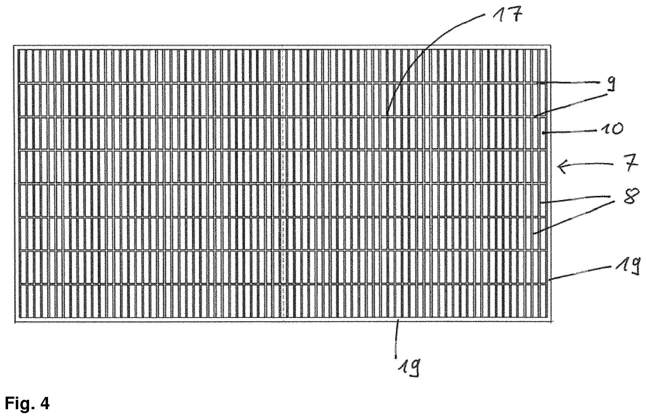

**Figur 4** zeigt eine Aufsicht des erfindungsgemäßen Gitterelementes 7 in Form eines Trays bzw. eines Korbes. Das Tray 7 stellt ein rechteckiges Gitterelement dar, das einen Gitterboden 17 aufweist. Der Gitterboden 17 besteht aus einer einlagigen Anordnung von einer Vielzahl von senkrecht ausgerichteten flachen Längsrippen 8 und einer Vielzahl von senkrecht ausgerichteten flachen Querrippen 9, die eine Vielzahl von offenen Zellen 10 bilden. Weiterhin sind entlang des gesamten Umfangs des Gitterelementes verlaufende Seitenwände 19 angeordnet. Dadurch wird eine Segmentierung der Tauscherebene erreicht.

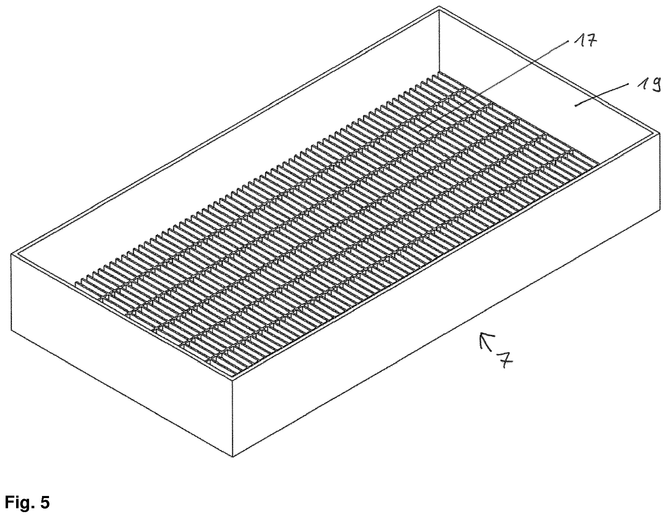

**Figur 5** zeigt eine perspektivische Ansicht des erfindungsgemäßen Gitterelementes in Form eines Trays 7. In der Figur ist dargestellt, dass das Tray 7 einen rechteckigen Gitterboden 17 aufweist, der entlang des gesamten Umfangs mit Seitenwänden 19 versehen ist, wodurch die Segmentierung der Tauscherebene erreicht wird.

### Bezugszeichenliste

- 1: Gaswäscher
- 2: Rauchgaseinlass
- 3: Rauchgasauslass
- 4: Sprüheinrichtung/Sprühdüsen
- 5: Flüssigkeitsauslass
- 6: Tauscherebene (Tauscherfläche)
- 7: Gitterelement, Tray, Korb
- 8: Längsrippen
- 9: Querrippen
- 10: offene Zelle
- 11: freier Strömungspfad
- 12: Absorbersumpf
- 13: Tropfenabscheider
- 14: Zuführung Absorptionsmittel
- 15: Rührwerk
- 16: Zuführung Oxidationsluft
- 17: Gitterboden
- 18: Pumpe
- 19: Seitenwand des Gitterelementes/Trays/Korbs

## Patentansprüche

1. Gaswäscher (1) zur Rauchgasentschwefelung ausgestattet mit Rauchgaseinlass (2), Rauchgasauslass (3), einer oder mehreren Sprüheinrichtungen (4) zum Versprühen eines flüssigen Absorptionsmittels auf Basis von Suspensionen enthaltend Calciumverbindungen, und Flüssigkeitsauslass (5),
sowie eine oder mehrere voneinander beabstandete Tauscherebenen (6) zur Bereitstellung von Tauscherflächen, um das durch den Gaswäscher (1) hindurchströmende Rauchgas mit dem flüssigen Absorptionsmittel in Kontakt zu bringen,
wobei die mindestens eine Tauscherebene (6) im Gaswäscher (1) im Wesentlichen horizontal ausgerichtet angeordnet ist,
wobei die jeweilige Tauscherebene (6) einen oder mehrere Bereiche mit einer Vielzahl von Durchlässen (10) für den Durchtritt des Rauchgases und des flüssigen Absorptionsmittels aufweist, wobei zumindest ein Teil dieser Durchtrittbereiche von einlagig angeordneten horizontal ausgerichteten Gitterelementen (7) gebildet wird;
das jeweilige Gitterelement (7) einen Gitterboden (17) aufweist, der aus einer einlagigen Anordnung von einer Vielzahl von senkrecht ausgerichteten flachen Längsrippen (8) und einer Vielzahl von senkrecht ausgerichteten flachen Querrippen (9) besteht, wobei die Längsrippen (8) und die Querrippen (9) der Gitterelemente (7) offene Zellen (10) ausbilden,
**dadurch gekennzeichnet, dass**
die Gitterböden (17) die Böden von Trays oder Körben darstellen, die senkrecht ausgerichtete Seitenwände (19) aufweisen, die entlang des Umfangs der Gitterböden (17) verlaufen und diese begrenzen, wobei sich die Seitenwände (19) aus der Ebene der Gitterböden (17) hinaus erstrecken, und wobei die Tauscherebene (6) eine Vielzahl von nebeneinander angeordneten Trays oder Körben aufweist.

2. Gaswäscher (1) gemäß Anspruch 1, wobei die Längsrippen (8) und die Querrippen (9) der Gitterelemente (7) offene Zellen (10) ausbilden, wobei die offenen Zellen (10) den ausschließlichen Durchlass des jeweiligen Gitterelementes (7) definieren.

3. Gaswäscher (1) gemäß Anspruch 1 oder 2, wobei die eine oder mehreren Tauscherebene(n) (6) die alleinig vorhandene quer zur Strömungsrichtung des Rauchgases ausgerichtete Tauscherfläche für den Kontakt zwischen dem Rauchgas und dem flüssigen Absorptionsmittel darstellt.

4. Gaswäscher (1) gemäß irgendeinem der Ansprüche 1 bis 3, wobei die Längsrippen (8) und die Querrippen (9) der Gitterelemente (7) offene Zellen (10) ausbilden, deren Ausdehnung in Längsrichtung 6,0 bis 20,0 cm, in Querrichtung 1,0 bis 5,0 cm und deren Tiefe 1,0 bis 8,0 cm beträgt.

5. Gaswäscher (1) gemäß irgendeinem der Ansprüche 1 bis 4, wobei die Längsrippen (8) und die Querrippen (9) der Gitterelemente (7) eine Stärke von 3,0 bis 10,0 mm und eine Breite von 1,0 bis 8,0 cm aufweisen.

6. Gaswäscher (1) gemäß irgendeinem der Ansprüche 1 bis 5, wobei die jeweilige Tauscherebene (6) zu mindestens 70% bezogen auf die Querschnittsfläche des Gaswäschers (1) mit den Gitterelementen (7) versehen ist.

7. Gaswäscher (1) gemäß irgendeinem der Ansprüche 1 bis 6, wobei der Rauchgaseinlass (2) seitlich am Gaswäscher (1) angeordnet ist und der Flächenanteil der offenen Zellen (10), die mit ihrer Längsrichtung im Wesentlichen quer zur Ausbreitungsrichtung des Rauchgases angeordnet sind, mindestens 60% beträgt.

8. Gaswäscher (1) gemäß irgendeinem der Ansprüche 1 bis 7, wobei bezogen auf den Gesamtquerschnitt des Gaswäschers (1) der jeweiligen Tauscherebene (6) die freie Fläche mindestens 45%, bevorzugt mindestens 50% und besonders bevorzugt mindestens 55% beträgt.

9. Tray oder Korb zur Verwendung als Tauscherfläche in einem Gaswäscher zur Rauchgasentschwefelung, wobei das Tray ein Gitterelement (7) darstellt, das einen Gitterboden (17) aufweist und entlang des gesamten Umfangs des Gitterbodens (17) verlaufende Seitenwände (19), wobei sich die Seitenwände (19) aus der Ebene der Gitterböden (17) hinaus erstrecken, wobei der Gitterboden (17) aus einer einlagigen Anordnung von einer Vielzahl von senkrecht ausgerichteten flachen Längsrippen (8) und einer Vielzahl von senkrecht ausgerichteten flachen Querrippen (9) besteht, wobei die Längsrippen (8) und die Querrippen (9) der Gitterelemente (7) offene Zellen (10) ausbilden.

10. Tray oder Korb gemäß Anspruch 9, wobei die Längsrippen (8) und die Querrippen (9) des Gitterelementes (7) offene Zellen (10) ausbilden, deren Ausdehnung in Längsrichtung 6,0 bis 20,0 cm, in Querrichtung 1,0 bis 5,0 cm und deren Tiefe 1,0 bis 8,0 cm beträgt.

11. Tray oder Korb gemäß Anspruch 9 oder 10, wobei die Längsrippen (8) und die Querrippen (9) der Gitterelemente (7) eine Stärke von 3,0 bis 10,0 mm und eine Breite von 1,0 bis 8,0 cm aufweisen.

12. Tray oder Korb gemäß irgendeinem der Ansprüche 9 bis 11, mit einer Grundfläche von A x B, wobei A 60,0 bis 200,0 cm und B 100,0 bis 300,0 cm beträgt.

13. Verwendung von Trays oder Körben gemäß irgendeinem der Ansprüche 9 bis 12 in einem Gaswäscher (1) zur Rauchgasentschwefelung, wobei ein oder mehrere Trays im Gaswäscher (1) im Wesentlichen horizontal ausgerichtet in einer oder in mehreren voneinander beabstandeten horizontal ausgerichteten Tauscherebenen (6) angeordnet werden,
wobei die Trays mit einem flüssigen Absorptionsmittel auf Basis von Suspensionen enthaltend Calciumverbindungen besprüht werden, um das durch den Gaswäscher (1) hindurchströmende Rauchgas mit dem flüssigen Absorptionsmittel in Kontakt zu bringen,
wobei das Rauchgas und das flüssige Absorptionsmittel die Gitterböden (17) der Trays (7) in zur Tauscherebene (6) senkrechten Richtungen durchströmen.

14. Verfahren zur Rauchgasentschwefelung, das in einem Gaswäscher (1) gemäß irgendeinem der Ansprüche 1 bis 8 durchgeführt wird, wobei das Rauchgas über den Rauchgaseinlass (2) in den Gaswäscher (1) geführt wird, den Gaswäscher (1) von unten nach oben durchströmt, mit einem flüssigen Absorptionsmittel auf Basis von Suspensionen enthaltend Calciumverbindungen besprüht wird, und den Gaswäscher über den Rauchgasauslass (3) verlässt,
wobei die Tauscherebene(n) (6) einschließlich der Gitterelemente (7) und der Gitterböden (17) von dem flüssigen Absorptionsmittel benetzt werden,
**dadurch gekennzeichnet, dass** mindestens ein Teil des Rauchgases die Tauscherebene(n) (6) über die Gitterböden (17) der Gitterelemente (7) passiert bzw. durchströmt.

## Claims

1. Gas scrubber (1) for flue gas desulfurization equipped with flue gas inlet (2), flue gas outlet (3), one or more spray devices (4) for spraying a liquid absorbent based on suspensions containing calcium compounds, and liquid outlet (5),
as well as one or more spaced-apart exchanger levels (6) to provide exchanger surfaces in order to bring the flue gas flowing through the gas scrubber (1) into contact with the liquid absorbent,
wherein the at least one exchanger level (6) in the gas scrubber (1) being arranged essentially horizontally,
wherein the respective exchanger level (6) comprises one or more areas with a plurality of passages (10) for the passage of the flue gas and the liquid absorbent, wherein at least some of these passage areas being formed by horizontally aligned grid elements (7) arranged in one layer;
wherein the respective grid element (7) comprises a grid floor (17) which consists of a single-layer arrangement of a plurality of vertically oriented flat longitudinal ribs (8) and a plurality of vertically oriented flat transverse ribs (9),
wherein the longitudinal ribs (8) and the transverse ribs (9) of the grid elements (7) form open cells (10),
**characterized in that**
wherein the grid floors (17) represent the bottoms of trays or cages having vertically oriented side walls (19), which run along and delimit the periphery of the grid floors (17), wherein the side walls (19) extend beyond the level of the grid floors (17), and wherein the exchanger level (6) has a plurality of trays or cages arranged side by side.

2. Gas scrubber (1) according to claim 1, wherein the longitudinal ribs (8) and the transverse ribs (9) of the grid elements (7) form open cells (10), the open cells (10) defining the exclusive passage of the respective grid element (7).

3. Gas scrubber (1) according to claim 1 or 2, wherein the one or more exchanger level(s) (6) is the only available exchange surface oriented transversely to the flow direction of the flue gas for the contact between the flue gas and the liquid absorbent.

4. Gas scrubber (1) according to any one of claims 1 to 3, wherein the longitudinal ribs (8) and the transverse ribs (9) of the grid elements (7) form open cells (10), the extent of which in the longitudinal direction is 6.0 to 20.0 cm, in transverse direction is 1.0 to 5.0 cm and their depth is 1.0 to 8.0 cm.

5. Gas scrubber (1) according to any one of claims 1 to 4, wherein the longitudinal ribs (8) and the transverse ribs (9) of the grid elements (7) have a thickness of 3.0 to 10.0 mm and a width of 1.0 to 8.0 cm.

6. Gas scrubber (1) according to any one of claims 1 to 5, wherein the respective exchanger level (6) is provided with the grid elements (7) at least for 70% of the cross-sectional area of the gas scrubber (1).

7. Gas scrubber (1) according to any one of claims 1 to 6, wherein the flue gas inlet (2) is arranged laterally of the gas scrubber (1) and the area proportion of the open cells (10), which are arranged with their longitudinal direction substantially transversely to the direction of propagation of the flue gas, is at least 60%.

8. Gas scrubber (1) according to any one of claims 1 to 7, wherein based on the total cross section of the gas scrubber (1) of the respective exchanger level (6) the free area is at least 45%, preferably at least 50% and particularly preferably at least 55%.

9. Tray or cage for use as an exchange surface in a gas scrubber for flue gas desulfurization, the tray being a grid element (7) which comprises a grid floor (17) and side walls (19) running along the entire circumference of the grid floor (17), wherein the side walls (19) extend beyond the level of the grid floors (17), the grid floor (17) consists of a single-layer arrangement of a plurality of vertically oriented flat longitudinal ribs (8) and a plurality of vertically oriented flat transverse ribs (9), wherein the longitudinal ribs (8) and the transverse ribs (9) of the grid elements (7) form open cells (10).

10. Tray or cage according to claim 9, wherein the longitudinal ribs (8) and the transverse ribs (9) of the grid element (7) form open cells (10), the extent of which in the longitudinal direction is 6.0 to 20.0 cm, in the transverse direction is 1.0 to 5.0 cm and its depth is 1.0 to 8.0 cm.

11. Tray or cage according to claim 9 or 10, wherein the longitudinal ribs (8) and the transverse ribs (9) of the grid elements (7) have a thickness of 3.0 to 10.0 mm and a width of 1.0 to 8.0 cm.

12. Tray or cage according to any one of claims 9 to 11, having an area of A x B, wherein A is 60.0 to 200.0 cm and B is 100.0 to 300.0 cm.

13. Use of trays or cages according to any one of claims 9 to 12 in a gas scrubber (1) for flue gas desulfurization, wherein one or more trays in the gas scrubber (1) are arranged substantially horizontally aligned in one or more spaced-apart horizontally aligned exchanger levels (6),
wherein the trays are sprayed with a liquid absorption medium based on suspensions containing calcium compounds in order to bring the flue gas flowing through the gas scrubber (1) into contact with the liquid absorption medium,
the flue gas and the liquid absorption medium flow through the grid floors (17) of the trays (7) in directions perpendicular to the exchanger level (6).

14. Process for flue gas desulfurization, which is carried out in a gas scrubber (1) according to any one of claims 1 to 8, wherein the flue gas is fed into the gas scrubber (1) via the flue gas inlet (2) and flows through the gas scrubber (1) from bottom to top, is sprayed with a liquid absorption medium based on suspensions containing calcium compounds, and leaves the gas scrubber via the flue gas outlet (3),
the exchanger level(s) (6) including the grid elements (7) and the grid floors (17) being wetted by the liquid absorption medium,
**characterized in that** at least a portion of the flue gas passes or flows through the exchanger level(s) (6) via the grid floors (17) of the grid elements (7).

## Revendications

1. Dispositif de lavage de gaz (1) pour la désulfuration des gaz de fumée équipé d'une entrée de gaz de fumée (2), d'une sortie de gaz de fumée (3), d'un ou plusieurs dispositifs de pulvérisation (4) pour la pulvérisation d'un absorbant liquide à base de suspensions contenant des composés de calcium, et une sortie de liquide (5),
ainsi qu'un ou plusieurs niveaux d'échange (6) espacés l'un de l'autre pour la mise à disposition de surfaces d'échange, afin de mettre en contact le gaz de fumée traversant le dispositif de lavage de gaz(1) avec l'agent d'absorption liquide,
dans lequel l'au moins un niveau d'échange (6) est agencé dans le dispositif de lavage de gaz (1) orienté de manière sensiblement horizontale,
dans lequel le niveau d'échange (6) respectif présente une ou plusieurs zones avec une pluralité de passages (10) pour le passage du gaz de fumée et de l'agent d'absorption liquide, dans lequel au moins une partie de ces zones de passage est formée par des éléments de grille (7) orientés horizontalement agencés en une couche ;
l'élément de grille (7) respectif présente un fond grillagé (17), qui se compose d'un agencement monocouche d'une pluralité de nervures longitudinales (8) plates orientées verticalement et d'une pluralité de nervures transversales (9) plates orientées verticalement, dans lequel les nervures longitudinales (8) et les nervures transversales (9) des éléments de grille (7) forment des cellules ouvertes (10),
**caractérisé en ce que**
les fonds grillagés (17) constituent les fonds de plateaux ou paniers, qui présentent des parois latérales (19) orientées verticalement, qui s'étendent le long de la circonférence des fonds grillagés (17) et les délimitent, dans lequel les parois latérales (19) s'étendent hors du plan des fonds grillagés (17), et dans lequel le niveau d'échange (6) présente une pluralité de plateaux ou paniers agencés les uns à côté des autres.

2. Dispositif de lavage de gaz (1) selon la revendication 1, dans lequel les nervures longitudinales (8) et les nervures transversales (9) des éléments de grille (7) forment des cellules ouvertes (10), dans lequel les cellules ouvertes (10) définissent le passage exclusif de l'élément de grille (7) respectif.

3. Dispositif de lavage de gaz (1) selon la revendication 1 ou 2, dans lequel l'un ou les plusieurs niveau(x) d'échange (6) constitue la seule surface d'échange présente orientée transversalement au sens d'écoulement du gaz de fumée pour le contact entre le gaz de fumée et l'agent d'absorption liquide.

4. Dispositif de lavage de gaz (1) selon l'une quelconque des revendications 1 à 3, dans lequel les nervures longitudinales (8) et les nervures transversales (9) des éléments de grille (7) forment des cellules ouvertes (10), dont l'extension dans le sens longitudinal est de 6,0 à 20,0 cm, dans le sens transversal de 1,0 à 5,0 cm et dont la profondeur est de 1,0 à 8,0 cm.

5. Dispositif de lavage de gaz (1) selon l'une quelconque des revendications 1 à 4, dans lequel les nervures longitudinales (8) et les nervures transversales (9) des éléments de grille (7) présentent une épaisseur de 3,0 à 10,0 mm et une largeur de 1,0 à 8,0 cm.

6. Dispositif de lavage de gaz (1) selon l'une quelconque des revendications 1 à 5, dans lequel le niveau d'échange (6) respectif est doté pour au moins 70 % de la section transversale du dispositif de lavage de gaz (1) d'éléments de grille (7).

7. Dispositif de lavage de gaz (1) selon l'une quelconque des revendications 1 à 6, dans lequel l'entrée de gaz de fumée (2) est agencée sur le côté du dispositif de lavage de gaz (1) et la part de surface des cellules ouvertes (10), qui sont agencées avec leur sens longitudinal sensiblement transversalement au sens de propagation du gaz de fumée, est d'au moins 60 %.

8. Dispositif de lavage de gaz (1) selon l'une quelconque des revendications 1 à 7, dans lequel la surface libre est d'au moins 45 %, de préférence d'au moins 50 % et le plus préférentiellement d'au moins 55 % par rapport à la section transversale totale du dispositif de lavage de gaz (1) du niveau d'échange (6) respectif.

9. Plateau ou panier destiné à être utilisé en tant que surface d'échange dans un dispositif de lavage de gaz pour la désulfuration des gaz de fumée, dans lequel le plateau constitue un élément de grille (7), qui présente un fond grillagé (17) et des parois latérales (19) s'étendant le long de toute la circonférence du fond grillagé (17), dans lequel les parois latérales (19) s'étendent hors du plan des fonds grillagés (17), dans lequel le fond grillagé (17) se compose d'un agencement monocouche d'une pluralité de nervures longitudinales (8) plates orientées verticalement et d'une pluralité de nervures transversales (9) plates orientées verticalement, dans lequel les nervures longitudinales (8) et les nervures transversales (9) des éléments de grille (7) forment des cellules ouvertes (10).

10. Plateau ou panier selon la revendication 9, dans lequel les nervures longitudinales (8) et les nervures transversales (9) de l'élément de grille (7) forment des cellules ouvertes (10), dont l'extension dans le sens longitudinal est de 6,0 à 20,0 cm, dans le sens transversal de 1,0 à 5,0 cm et dont la profondeur est de 1,0 à 8,0 cm.

11. Plateau ou panier selon la revendication 9 ou 10, dans lequel les nervures longitudinales (8) et les nervures transversales (9) des éléments de grille (7) présentent une épaisseur de 3,0 à 10,0 mm et une largeur de 1,0 à 8,0 cm.

12. Plateau ou panier selon l'une quelconque des revendications 9 à 11, avec une superficie de A x B, dans lequel A est de 60,0 à 200,0 cm et B est de 100,0 à 300,0 cm.

13. Utilisation de plateaux ou paniers selon l'une quelconque des revendications 9 à 12 dans un dispositif de lavage de gaz (1) pour la désulfuration des gaz de fumée, dans lequel un ou plusieurs plateaux dans le dispositif de lavage de gaz (1) sont agencés orientés de manière sensiblement horizontale dans un ou dans plusieurs niveaux d'échange (6) orientés horizontalement espacés l'un de l'autre,
dans lequel les plateaux sont pulvérisés avec un absorbant liquide à base de suspensions contenant des composés de calcium, afin de mettre en contact le gaz de fumée traversant le dispositif de lavage de gaz (1) avec l'agent d'absorption liquide,
dans lequel le gaz de fumée et l'agent d'absorption liquide traversent les fonds grillagés (17) des plateaux (7) dans des directions perpendiculaires au niveau d'échange (6).

14. Procédé de désulfuration des gaz de fumée, qui est réalisé dans un dispositif de lavage de gaz (1) selon l'une quelconque des revendications 1 à 8, dans lequel le gaz de fumée est guidé via l'entrée de gaz de fumée (2) dans le dispositif de lavage de gaz (1), traverse le dispositif de lavage de gaz (1) du bas vers le haut, est pulvérisé avec un absorbant liquide à base de suspensions contenant des composés de calcium, et quitte le dispositif de lavage de gaz via la sortie de gaz de fumée (3),
dans lequel les niveau(x) d'échange (6) y compris les éléments de grille (7) et les fonds grillagés (17) sont mouillés par l'agent d'absorption liquide,
**caractérisé en ce qu'**au moins une partie du gaz de fumée passe ou traverse le(s) niveau(x) d'échange (6) via les fonds grillagés (17) des éléments de guide (7).
